# EUROPEAN PATENT APPLICATION

(11) **EP 1 319 802 A2**
(43) Date of publication of application: **18.06.2003**
(21) Application number: 02258384.3
(22) Date of filing: 04.12.2002
(51) Int. Cl.: F01D 5/00, B23P 15/00

(54) **Turbine nozzle segment and method of repairing same**

(30) Priority: 11.12.2001 US 14696
(71) Applicant: GENERAL ELECTRIC COMPANY, Schenectady, NY 12345 (US)
(72) Inventor: Heyward, John Peter, Loveland, Ohio 45140 (US); White, Gregory Alan, Cincinnati, Ohio 45209 (US); Hagle, Michael Philip, Mason, Ohio 45040 (US); Lee, Ching-Pang, Cincinnati, Ohio 45243 (US)
(74) Representative: Pedder, James Cuthbert

(57) **Abstract**

The present invention provides a method of repairing a turbine nozzle segment (10) having one or more vanes (12) disposed between outer and inner bands (14, 16). The method includes separating at least one of the outer and inner bands (14, 16) from the vanes (12). The vanes (12) are cut through in close proximity to the band being replaced. A newly manufactured replacement band (24) including protruding vane stubs (28) is provided for each one of the original bands (14, 16) being replaced. The replacement band (24) is attached to the vanes (12) by welding.

## Description

This invention relates generally to gas turbine engines and more particularly to the repair of turbine nozzle segments used in such engines.

A gas turbine engine includes a compressor that provides pressurized air to a combustor wherein the air is mixed with fuel and ignited for generating hot combustion gases. These gases flow downstream to a turbine section that extracts energy therefrom to power the compressor and provide useful work such as powering an aircraft in flight. Gas turbine engines typically include stationary turbine nozzles that enhance engine performance by appropriately influencing gas flow and pressure within the turbine section. In multi-stage turbine sections, turbine nozzles are placed at the entrance of each turbine stage to channel combustion gases into the turbine rotor located downstream of the nozzle. Turbine nozzles are typically segmented around the circumference thereof with each nozzle segment having one or more airfoil vanes disposed between inner and outer bands that define the radial flowpath boundaries for the hot combustion gases flowing through the nozzle. These nozzle segments are mounted to the engine casing to form an annular array with the vanes axially placed between the rotor blades of adjacent turbine stages.

During operation, nozzle segments are exposed to a high temperature gas stream that can lead to oxidation and corrosion, thereby limiting the effective service life of these components. Accordingly, nozzle segments are typically fabricated from high temperature cobalt or nickel-based superalloys and are often coated with corrosion and/or heat resistant materials. Furthermore, nozzle segments (particularly those in the high pressure turbine section) are often cooled internally with cooling air extracted from the compressor to prolong service life. Even with such efforts, portions of the nozzle segments, can suffer parent metal cracking, material erosion due to oxidation and corrosion, and other damage such that the nozzle segments must be either repaired or replaced to maintain safe, efficient engine operation. Because nozzle segments are complex in design, are made of relatively expensive materials, and are expensive to manufacture, it is generally more desirable to repair them whenever possible.

One common repair process includes chemically stripping the environmental coating, applying a braze alloy to distressed areas to repair distress, and reapplying the environmental coating. However, such repair processes are limited by local distortion and minimum wall thickness limits, which may be exceeded as a result of repeated repair and chemical stripping processes. That is, when the airfoil wall does not meet a minimum thickness, the nozzle segment cannot be repaired by the known repair process. To avoid scrapping the entire nozzle segment in such situations, airfoil replacement techniques have been developed. One current airfoil replacement technique comprises removing the distressed vane from the inner and outer bands and welding a new airfoil to the salvaged bands. When the distressed airfoil is removed from the bands, a stub of the original airfoil remains. The new airfoil is welded to these stubs. Other current repair methods involve replacing one or more airfoils or bands by disassembling a nozzle segment at the braze joints, providing one or more replacement components, and re-brazing the assembly together. This extends the life of the nozzle segment, but still results in a brazed joint, which is not as oxidation resistant as a welded joint. In particular, the braze joints are typically located in the fillet radii at the junctions of the vanes and the inner and outer band flowpath surfaces, which are difficult areas to cool, and can be the hottest locations on the nozzle segment during operation. The high temperatures at these locations accelerate the oxidation process in the braze joints. Furthermore, the use of a braze joint requires additional weight in the parts to be joined in order to have a satisfactory joint.

Accordingly, it would be desirable to have a band replacement technique for repairing turbine nozzle segments in which the airfoil-to-band joints are equivalent to or better than the same joints in an originally manufactured nozzle segment.

The above-mentioned need is met by the present invention, which provides a method of repairing a turbine nozzle segment having one or more vanes disposed between outer and inner bands. The method includes separating at least one of the outer and inner bands from the vanes. The vanes are cut through in close proximity to the band being replaced. A newly manufactured replacement band including protruding vane stubs is provided for each one of the original bands being replaced. The replacement band is attached to the vanes by welding.

The invention will now be described in greater detail, by way of example, with reference to the drawings, in which:-
Figure 1 is a perspective view of an engine run turbine nozzle segment.
Figure 2 is a perspective view of the nozzle segment of Figure 1 with the inner band removed.
Figure 3 is a perspective view of a replacement inner band used in the repair method of the present invention.
Figure 4 is a perspective view of a repaired turbine nozzle segment.

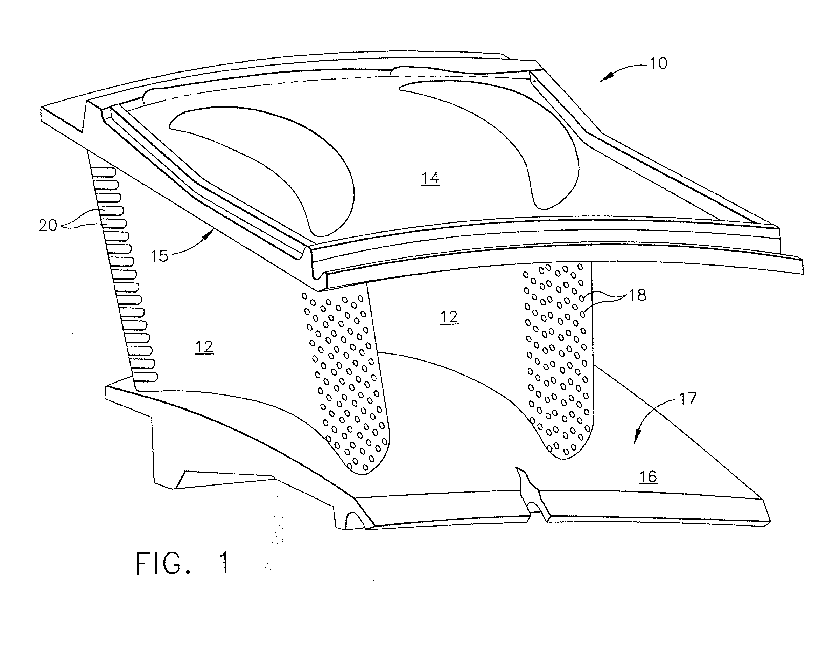

Referring to the drawings wherein identical reference numerals denote the same elements throughout the various views, Figure 1 shows an engine-run turbine nozzle segment 10 having first and second nozzle vanes 12. The vanes 12 are disposed between an arcuate outer band 14 and an arcuate inner band 16. The vanes 12 define airfoils configured so as to optimally direct the combustion gases to a turbine rotor (not shown) located downstream thereof. The outer and inner bands 14 and 16 define the outer and inner radial boundaries, respectively, of the gas flow through the nozzle segment 10. Each of the bands 14 and 16 has a generally arcuate flowpath surface, denoted 15 and 17 respectively, which is exposed to the hot combustion gases. The vanes 12 may have a plurality of conventional cooling holes 18 and trailing edge slots 20 formed therein. Cooling holes 18 are most typically used with first stage nozzle segments; later stage nozzle segments ordinarily do not utilize such cooling holes 18. The nozzle segment 10 is preferably made of a high quality superalloy, such as a cobalt or nickel-based superalloy, and may be coated with a corrosion and oxidation resistant material and/or a thermal barrier coating. A gas turbine engine will include a plurality of such segments 10 arranged circumferentially in an annular configuration. While the repair methods of the present invention are described herein with respect to a two-vane nozzle segment, it should be recognized that the present invention is equally applicable to nozzle segments having any number of vanes.

During engine operation, the nozzle segment 10 can experience damage such as might result from local gas stream over-temperature or foreign objects impacting thereon. As mentioned above, a portion of the nozzle segment 10 may become damaged to the point where it cannot be repaired by known repair processes. The present invention is directed to a method of repairing a nozzle segment 10 in which the vanes 12 are repairable while other nozzle segment structure is non-repairable. By way of example, the inner band 16 is shown in Figure 1 as having damage such as to be non-repairable while the vanes 12 are repairable.

There are two basic types of interface between the vanes 12 and the bands 14, 16. In the first type the vanes 12 and part (or all) of the outer and inner bands, 14, 16 are cast as one integral component with no joint between the vanes 12 and the bands. In the second type the ends of the vanes 12 are received in sockets in the outer and inner bands 14, 16 and secured by brazed joints. The repair method of the present invention may be used with either type of interface, and the method steps of the repair are identical regardless of the type of interface. However, the present invention has an advantage over other methods when repairing a nozzle segment of the second type, as explained more fully below.

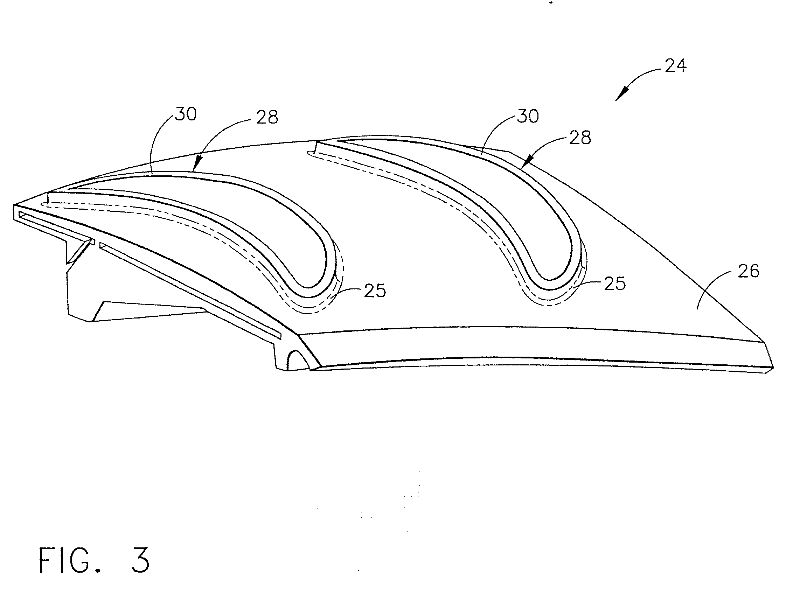

The present invention will now be described more particularly with respect to the replacement of the inner band 16. However, it will be understood that the present invention is equally applicable to the replacement of the outer band 14, or to the replacement of both bands at the same time. The repair method includes the principal steps of separating the inner band 16 from the existing vanes 12, and then joining the salvaged vanes 12 and outer band 14 to a newly manufactured replacement band 24 (see Figure 3) that replaces the non-repairable inner band 16. More specifically, the initial step of the repair method is to inspect engine run nozzle segments 10 returned from the field for servicing to identify such segments 10 that have repairable vanes 12, while the inner band 16 is non-repairable. Once a suitable nozzle segment 10 has been identified, it should be stripped of any coating materials (such as corrosion or thermal resistant coatings) that may be present. The coating material may be stripped using any suitable technique, such as grit blasting, chemical baths, and the like, or by a combination of such techniques. In addition to the repair process of the present invention, other conventional repairs may be carried out concurrently, e.g. crack repairs, dimensional build ups etc., depending on the condition of the components of the nozzle segment 10 that are to be salvaged. These repairs are performed using known repair techniques such as alloy brazing, alloy build up, welding and the like.

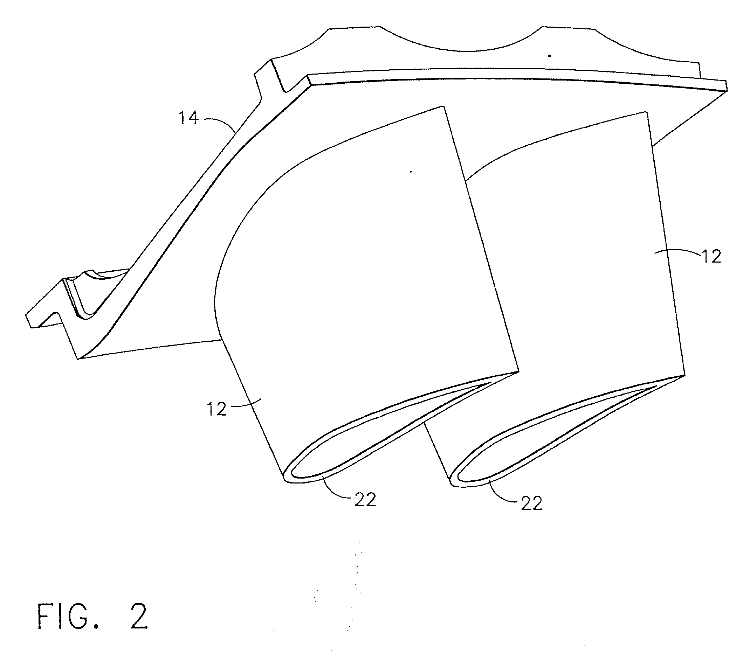

The next step is to separate the inner band 16 from the original vanes 12. Separation is accomplished by cutting through each vane 12 near the inner band 16, thereby leaving a stub of each vane on the inner band 16, and furthermore exposing a joining surface 22 at the end of each of the vanes 12. The cutting can be performed by any conventional means such as an abrasive cutting wheel or electrical discharge machining (EDM). After separation, the unsalvageable structure is scrapped. The salvageable structure is shown in Figure 2 and includes the outer band 14 and the vanes 12. The vanes 12 are then prepared for joining to the replacement band by machining the joining surfaces 22 of the vanes 12 to mate up closely to the ends of one or more vane stubs 28, which are a part of the replacement band 24 described below.

Figure 3 shows a newly manufactured replacement band 24 used as a replacement for the original inner band 16. The replacement band 24, which is typically a cast member, has configuration generally matching that of the original inner band 16. Specifically, the replacement band 24 has a generally arcuate shape including a flowpath surface 26 which is exposed to the hot combustion gases during operation. One or more vane stubs 28 extend a short distance radially from the flowpath surface 26. The vane stubs 28 have a cross-sectional shape matching that of the vanes 12 and have a joining surface 30. The joining surfaces 30 may be parallel to the flowpath surface 26, or may be planar depending upon the joint created when the vanes 12 are cut from the original nozzle segment 10. The joining surfaces 30 of the stubs 28 may be machined, for example, by an EDM process, to provide a close fit with the joining surfaces 22 of the vanes 12. If desired, features such as steps or notches (not shown) could be formed in the joining surfaces 30, along with mating features in the joining surfaces 22 of the vanes 12, to improve alignment of the parts during assembly. A radiused fillet 25 is disposed around the periphery of each stub 28 at the junction between the stubs 28 and the flowpath surface 26. The fillets 25 are integral to the casting of the replacement band 24. A replacement band 24 for the outer band 14 would be similar to that for the inner band 16 in that it would have a configuration generally matching that of the outer band 14 to be replaced and would include one or more vane stubs extending from its flowpath surface.

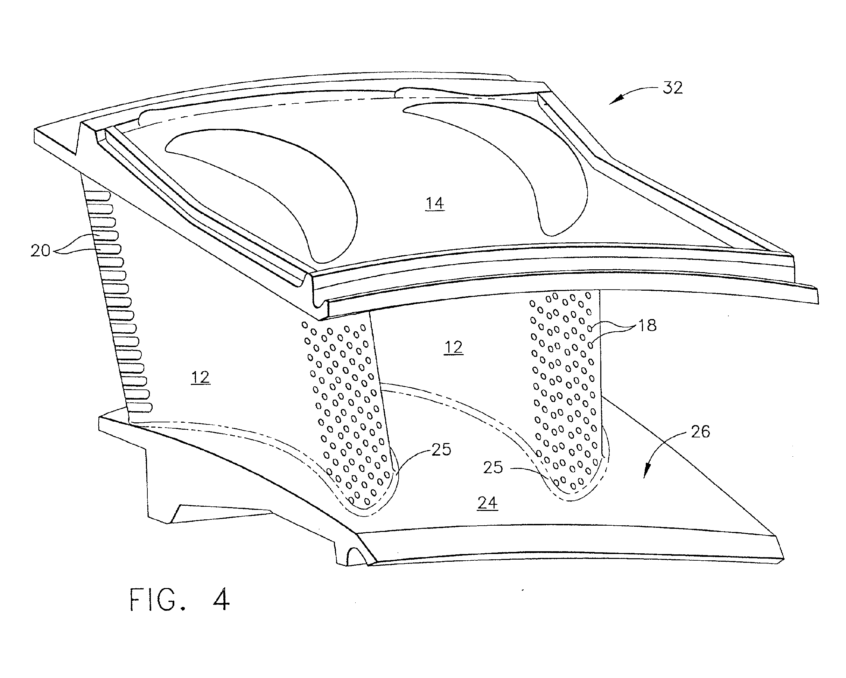

After the machining operations are completed, the salvaged vanes 12 are assembled with the replacement band 24 to form a repaired nozzle segment 32 as shown in Figure 4. The parts are then joined together by welding along the joining surfaces 22 and 30. The vanes 12 may be welded to the corresponding replacement band 24 by a process such as electron beam welding. After the replacement band 24 has been joined to the vanes 12, the weld joints are machined if necessary, and any corrosion or thermal coatings that were originally used are reapplied in a known manner. The result is a repaired nozzle segment 32 that meets the new make part function and strength requirements at a lower cost.

In one embodiment, the replacement band 24 is fabricated from the same material as the vanes 12 and/or the original bands 14, 16 to produce a repaired nozzle segment 32 that retains the material properties of the original nozzle segment 10. However, in another embodiment, the replacement band 24 is fabricated from a different material, preferably an alloy having enhanced material properties. It is often the case that during the service life of a gas turbine engine component such as a nozzle segment, improved alloys suitable for use with such components are developed. Traditionally, engine operators would have to replace existing components with new components fabricated from the improved alloy to realize the enhanced material properties. However, by fabricating the replacement bands from the improved alloy, the repaired nozzle segment 32 will obtain, in part, the enhanced material properties.

The present invention is particularly advantageous for use with nozzle segments 10 having a brazed joint between the vanes 12 and the bands 14, 16, because it eliminates the brazed interface in the repaired nozzle segment 32. This has two benefits. First, in a brazed joint, the parts on each side of the joint must have a minimum surface area for the brazing material to adhere to for acceptable joint integrity (for example a lap joint may be used). This essentially requires two metal thicknesses at the joint location, whereas only one thickness may be needed otherwise. In contrast, the welded joint of the present invention is a butt joint having just one metal thickness, which eliminates the extra material, and thus reduces the weight of the repaired nozzle segment 32 compared to the original nozzle segment 10. Second, a brazed joint is more prone to oxidation during engine operation than the parent metal of the vanes 12, bands 14 and 16, and replacement band 24. In particular, the braze joints are typically located at the fillet radii between the vanes 12 and the flowpath of the bands 14 and 16. These locations are typically the hottest locations on the nozzle segment 10 and are difficult to cool properly. The high temperatures at the fillet radii accelerate oxidation of the braze joints. In contrast, the replacement bands 24 of the present invention include integral stubs 28 having fillet radii 25 formed as part of the casting. The fillet radii 25 are integrally formed of the same material as the replacement band 24, which is more oxidation-resistant than the braze material. Also, the cast-in fillet radius feature can be cooled if necessary by known methods (e.g., impingement or film cooling) more easily than a braze joint could be cooled. The elimination of the brazed joint will thus improve the durability of the repaired nozzle segment 32 as a whole.

The present invention has a further advantage in the case where only one of the bands 14, 16 is to be replaced, in that the vanes 12 are not separated from the band that is to be salvaged and are therefore held in their original positions. The throat area of the nozzle segment 10 can therefore be maintained more accurately since the repair does not affect the orientation of the vanes 12 relative to each other. This is important because the aerodynamic characteristics of the turbine nozzle have a major impact on the performance of the turbine.

The foregoing has described a method of repairing a turbine nozzle segment having one or more vanes disposed between outer and inner bands. The method includes separating at least one of the outer and inner bands from the vanes. The vanes are cut through in close proximity to the band being replaced. A newly manufactured replacement band including protruding vane stubs is provided for each one of the original bands being replaced. The replacement band is attached to the vanes by welding.

## Claims

1. A method of repairing a turbine nozzle segment (10) having at least one vane (12) disposed between inner and outer arcuate bands (14, 16), said bands (14, 16) each having a flowpath surface (15, 17), said method comprising:
separating at least one of said outer and inner bands (14, 16) from said vane (12) by cutting said vane (12) at a location near said flowpath surface (15, 17) so as to expose a joining surface on said vane (12);
providing a newly manufactured replacement band (24) having a flowpath surface (26), said replacement band (24) including a vane stub (28) extending from said flowpath surface (26) of said replacement band (24), said vane stub having a joining surface (30); and
welding said replacement band (24) to said vane (12) at said joining surfaces.

2. The method of repairing a turbine nozzle segment (10) of claim 1 wherein said replacement band (24) is fabricated from a material that has enhanced material properties with respect to the material that the band being replaced is fabricated from.

3. A method of repairing a turbine nozzle segment (10) having at least two vanes disposed between inner and outer arcuate bands (14, 16), said bands (14, 16) each having a flowpath surface (15, 17), said method comprising:
separating one of said outer and inner bands (14,16) from said vanes (12) by cutting said vanes (12) at a location near said flowpath surface (15, 17) so as to expose a joining surface (22) on said vanes (12);
providing a newly manufactured replacement band (24) having a flowpath surface (26), said replacement band (24) including a plurality of vane stubs (28) extending from said flowpath surface (26) of said replacement band (24), said vane stubs (28) each having a joining surface (30); and
welding said replacement band (24) to said vanes (12) at said joining surfaces (22, 30).

4. The method of repairing a turbine nozzle segment (10) of claim 3 wherein said replacement band (24) is fabricated from a material that has enhanced material properties with respect to the material that the band being replaced is fabricated from.

5. A method of repairing a turbine nozzle segment (10) having at least one vane (12) extending between inner and outer arcuate bands (14, 16), said bands (14, 16) each having a flowpath surface (15, 17), wherein at least one end of said vane (12) is received in a socket in one of said bands (14, 16) and secured thereto by a brazed joint, said method comprising:
separating at least one of said outer and inner bands (14, 16) and its corresponding brazed joint from said vane (12) by cutting said vane (12) at a location near said flowpath surface (15, 17) so as to expose a joining surface (22) on said vane (12);
providing a newly manufactured replacement band (24) having a flowpath surface (26), said replacement band (24) including a vane stub (28) extending from said flowpath surface (26) of said replacement band (24), said vane stub (28) having a joining surface (30); and
welding said replacement band (24) to said vane (12) at said joining surfaces (22, 30).

6. The method of repairing a turbine nozzle segment (10) of claim 5 wherein said replacement band (24) is fabricated from a material that has enhanced material properties with respect to the material that the band being replaced is fabricated from.

7. A method of repairing a turbine nozzle segment (10) having a pair of vanes extending between arcuate inner and outer bands (14, 16), said bands (14, 16) each having a flowpath surface (15, 17), wherein opposite ends of each of said vanes (12) are received in sockets disposed in said bands (14, 16) and secured thereto by brazed joints, said method comprising:
separating said outer band and its corresponding brazed joints from said vanes (12) by cutting said vanes (12) at a location near said flowpath surface (15, 17) of said outer band so as to expose a joining surface (22) on each of said vanes (12);
providing a newly manufactured outer replacement band (24) having a flowpath surface (26), said replacement band (24) having a pair of vane stubs (28) extending from said flowpath surface (26) of said outer replacement band (24), each of said vane stubs (28) having a joining surface (30); and
welding said outer replacement band (24) to said vane (12) at said joining surfaces (22, 30).

8. The method of repairing a turbine nozzle segment (10) according to claim 7 further comprising:
separating said inner band and its corresponding brazed joints from said vanes (12) by cutting said vanes (12) at a location near said flowpath surface of said outer band so as to expose a joining surface (22) on each of said vanes (12);
providing a newly manufactured inner replacement band (24) having a flowpath surface (26), said inner replacement band (24) including a pair of vane stubs (28) extending from said flowpath surface (26) of said inner replacement band (24), each of said vane stubs (28) having a joining surface (30); and
welding said inner replacement band (24) to said vanes (12) at said joining surfaces (22, 30).

9. The method of repairing a turbine nozzle segment (10) of claim 7 wherein said outer replacement band (24) is fabricated from a material that has enhanced material properties with respect to the material that the band being replaced is fabricated from.

10. The method of repairing a turbine nozzle segment (10) of claim 8 wherein said inner band is fabricated from a first material, and said outer band, said vanes, and said inner replacement band (24) are fabricated from a second material, said second material having enhanced material properties with respect to said first material.
